Europäisches Patentamt

**European Patent Office**

Office européen des brevets

(19)

(11) Numéro de publication: **0 177 529 B1**

(12) **FASCICULE DE BREVET EUROPEEN**

(45) Date de publication de fascicule du brevet:
**25.09.91**

(51) Int. Cl.⁵: **G11B 17/26, G11B 25/04**

(21) Numéro de dépôt: **85901467.2**

(22) Date de dépôt: **29.03.85**

(86) Numéro de dépôt internationale :
**PCT/FR85/00069**

(87) Numéro de publication internationale :
**WO 85/04510 (10.10.85 85/22)**

(54) **LECTEUR PLURI VIDEO-DISQUES MULTI-FACES.**

(30) Priorité: **30.03.84 FR 8405108**
**03.07.84 FR 8410496**

(43) Date de publication de la demande:
**16.04.86 Bulletin 86/16**

(45) Mention de la délivrance du brevet:
**25.09.91 Bulletin 91/39**

(84) Etats contractants désignés:
**AT BE CH DE FR GB IT LI LU NL SE**

(56) Documents cités:
**DE-A- 3 318 279      FR-A- 1 191 882**
**GB-A- 2 064 260      US-A- 3 158 844**
**US-A- 3 641 528      US-A- 3 774 172**
**US-A- 4 286 790**

**Patents Abstracts of Japan, vol. 5, no.146
(P-80)(818), 16 septembre 1981 & JP-
A-5680859**

**SMPTE Journal, vol. 85, no. 8, août 1976
(Scarsdale, US) W. Connolly et al.: "The**

electromic still store: a digital system for the
storage and display of still pictures", voir le
document en entier

(73) Titulaire: **DE FAY, Stéfan Grigore**
**60, rue Fondary**
**F-75015 Paris(FR)**

(72) Inventeur: **DE FAY, Stéfan Grigore**
**60, rue Fondary**
**F-75015 Paris(FR)**

(74) Mandataire: **Rataboul, Michel**
**Cabinet Michel Rataboul 69, rue de Richelieu**
**F-75002 Paris(FR)**

EP 0 177 529 B1

## Description

Le dispositif de la présente invention permet l'accès immédiat à des informations (images) enregistrées sur plusieurs particulièrement video disques se trouvant chargés dans le dispositif. Il permet, lié à un ordinateur, le mélange de plusieurs informations provenant de différents disques du même dispositif ou de dispositifs différents reliés entre eux. Toutes les fonctions déjà existantes dans les lecteurs de video disques connus La capacité peut être augmentée au fur et à mesure des besoins.

Il n'existe pas actuellement de dispositifs de ce genre dans le commerce, la visualisation des video-disques se faisant face après face, en retournant le video-disque et en lisant uniquement une face à la fois sur un même lecteur. Pour une extension de capacité, il existe actuellement, deux possibilités : on doit employer d'autres lecteurs de video-disques reliés entre eux, un lecteur pour chaque face de video-disque ou il faut utiliser le principe des "juke boxes" destinés aux disques phonographiques et qui impose des temps d'attente incompatibles avec les moyens informatiques actuels.

Les principaux inconvénients sont donc : l'obligation d'acheter pour chaque face de video-disque un lecteur complet au cas où la visualisation de plusieurs video-disques est nécessaire : le temps perdu pour la recherche et la pose d'un video-disque: la manipulation de celui-ci avec tous les risques que cela comporte : l'impossibilité de s'adresser à plusieurs video-disques en même temps, en utilisant un seul lecteur pour le mixage d'informations: l'encombrement inévitable lorsque l'on doit employer simultanément plusieurs lecteurs de video-disque: l'impossibilité d'accéder aux deux faces d'un video-disque sans le retourner vers l'analyseur d'informations actuellement à base d'un faisceau laser.

On connaît, néanmoins, le brevet US-A-3 774 172 qui décrit un lecteur de video-disque comprenant plusieurs video-disques et un analyseur d'informations mais il ne décrit pas une structure grâce à laquelle les deux faces d'un même disque peuvent être lues simultanément. Avec les dispositions de ce brevet, la modulabilité est exclue car il ne permet l'accès qu'à un seul usager à la fois sur une même face de video-disque. US-A-3641528 décrit un seul moteur pour l'entraînement en rotation d'une colonne composée de disques amovible

Le dispositif selon l'invention, lui, est modulaire, permet l'accès simultané pour la lecture ou pour l'enregistroment d'un ou plusieurs usagers sur une seule et même face ou sur deux faces différentes d'un ou plusieurs disques.

Ce dispositif permet la lecture simultanée des deux faces d'un même disque afin que le dispositif le plus simple, c'est à dire ne comportant qu'un seul disque, puisse voir sa capacité doublée puisque ses deux faces peuvent être lues en une seule phase.

Il en résulte des avantages économiques considérables si l'on ajoute à cela la possibilité de rendre l'ensemble modulaire c'est à dire susceptible de recevoir des éléments complémentaires convenablement coordonnés pour n'utiliser qu'une configuration de base relativement simple et bon marché et de la compléter au fur et à mesure des besoins en augmentant sa capacité de stockage et de lecture.

Un lecteur suivant le préambule de la revendication est connu du US-A-3774 172 L'invention est contenu dans la revendication 1. Les revendications 2-10 contiennent des modes de réalisation de l'invention.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique en coupe montrant un dispositif selon une caractéristique de l'invention comprenant plusieurs modules superposés associés à un lecteur "mère".

La figure 2 est une vue schématique partielle en coupe d'un dispositif conforme à une caractéristique de l'invention montrant une colonne centrale à interruption complète supportant des video-disques amovibles indépendamment les uns des autres.

La figure 3 est une vue schématique partielle en coupe montrant l'association de trois modules conformes à une caractéristique de l'invention.

La figure 4 montre un mode de réalisation d'une caractéristique de l'invention selon lequel plusieurs séries de vidéo-disques superposés, c'est-à-dire disposées parallèlement, sont associés à plusieurs platines elles-mêmes superposées.

La figure 5 est une vue Schématique en plan montrant une variante selon laquelle des vidéo-disques sont disposés à l'extrémité des bras radiaux, soit en un seul étage, soit en plusieurs étages superposés auquel cas cette figure est une vue en plan du mode de réalisation de la figure 4.

Les figures 6 et 7 sont deux vues schématiques partielles montrant respectivement la mise en place d'un vidéo-disque situé à l'extrémité d'un bras à deux branches et l'entraînement de ce vidéo-disque, le bras demeurant immobile.

La figure 8 est une vue schematique partielle en coupe montrant une variante du mode de réalisation des figures 6 et 7.

La figure 9 est une vue schematique partielle en coupe montrant un autre mode de réalisation prévoyant des bras à une seule branche.

Les figures 10 et 11 sont des vues schématiques respectivement en coupe et en plan d'un autre mode de réalisation selon lequel un bras portant un couple d'analyseurs d'informations est monté mobile par rapport à une pluralité de video-disques.

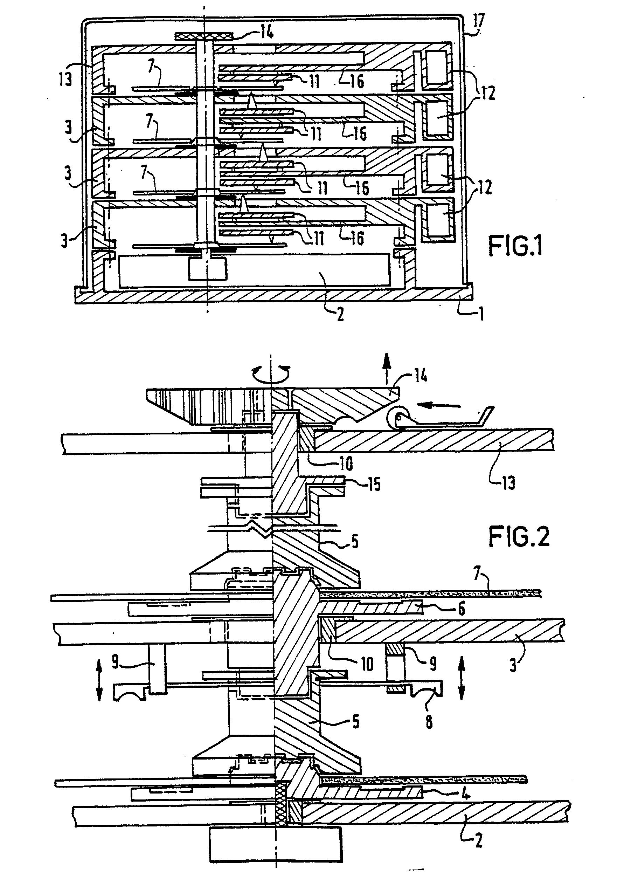

En se reportant aux figures 1 et 2, on voit qu'un dispositif comporte un châssis 1 sur lequel est fixé de façon rigide un lecteur "mère" 2, démuni de son couvercle d'origine, s'il s'agit d'une adaptation à un modèle existant. Sur ce châssis de base 1, on peut fixer le premier "étage" comportant une platine 3 qui est fixée sur le châssis 1 par des vis. Ce positionnement permet l'alignement rigoureux de l'axe du moteur du lecteur "mère" 2 avec le prolongement de cet axe par la pièce à créneaux 4, d'adaptation sur l'axe du lecteur "mère" 2, créneaux qui servent à réaliser le couplage mécanique avec la pièce 5 qui est fixée par des vis à 120 degrés sur la pièce 6, sur laquelle repose le premier video-disque supplémentaire 7, (on ne compte donc pas celui qui se trouve normalement dans le lecteur 2).

L'ensemble des pièces 5 et 6 peut avoir un mouvement vers le haut et vers le bas grâce au levier 8 actionné manuellement ou par l'intermédiaire d'un système électro-mécanique quelconque. Le levier 8 glisse dans ses guidages 9 permettant deux positions avec blocage (en haut ou en bas) autorisant ainsi la pose ou l'enlèvement du video-disque 7. La pièce 6 tourne dans le palier 10 qui est fixé de façon rigide dans la platine 3. Dans la même platine 3 est prévu une fente par laquelle le faisceau laser de l'analyseur d'informations 11, peut "voir" le video-disque. L'analyseur d'informations 11 et son système d'asservissement est d'un type couramment employé par les fabricants de lecteurs de video-disques. Dans la boite 12 se trouve la partie électronique d'asservissement de l'analyseur d'informations 11, l'alimentation du système et la ou les interfaces pour relier le système de lecture supplémentaire à la partie video du lecteur "mère". Dans la même boîte 12 se trouvent aussi les interfaces pour les raccordements à un ordinateur de gestion assurant la partie de recherche d'informations existant en stock sur les video-disques chargés dans le dispositif. On peut donc ajouter autant de modules supplémentaires de lecture de video-disques que l'on en a besoin.

Une fois établi le nombre des "étages" supplémentaires de lecture, on met en place la platine 13, similaire aux autres, avec en plus la pièce 14 qui peut glisser verticalement, dans le but de relâcher la colonne moteur sur laquelle sont chargés les video-disques 7. L'entraînement de l'ensemble des video-disques se faiant par pression, la pièce mobile 14 peut être mécaniquement verrouillée en position de fonctionnement par un verrou déblocable à volonté. Sur la pièce 14 se trouve fixée par des vis la pièce 15 qui, à son tour, est montée solidairement avec une pièce 5. Sur la pièce 16 de chacun des modules peuvent être fixés deux analyseurs d'informations 11 superposés; un analyseur inférieur lisant la face supérieure d'un video-disque appartenant à un module inférieur, et un deuxième annalyseur supérieur lisant la face inférieure d'un video-disque appartenant à cet étage. L'ensemble est protégé contre tout risque par un couvercle 17.

Un video-disque chargé dans un lecteur professionnel permet un stockage limité à 54.000 images assurant l'accès à chaque image, c'est-a-dire défilement image par image, stop sur une image, et surtout la recherche d'une image ou d'une séquence précise. Le dispositif permet d'augmenter d'une façon considérable la capacité d'adressage par l'augmentation du nombre des video-disques reliés au même lecteur "mère". Si l'on utilise un lecteur "mère" (ou tout autre système d'entraînement compatible du point de vue mécanique et électronique avec les exigences de la lecture des video-disques auquel on ajoute quatre modules) on peut accéder quasi instantanément à n'importe laquelle des informations parmi 270.000 en utilisant cinq video-disques enregistrés sur une seule face, ou bien l'une parmi 540.000 informations, en ajoutant uniquement quatre analyseurs d'informations en se servant de video-disques à double face.

Naturellement, le dispositif est applicable à tout disque d'enregistrement d'informations : video-disques, disques opto-numériques, "compact disques" et analogues, bien que dans la présente description on fasse seulement allusion aux seuls vidéo-disques.

Le lecteur est modulaire afin que sa capacité de stockage et de lecture soit augmentée au fur et à mesure des besoins par addition de modules ou "étages" supplémentaires.

On va maintenant décrire d'autres dispositifs permettant d'adapter un lecteur conforme à l'invention à différents besoins des utilisateurs.

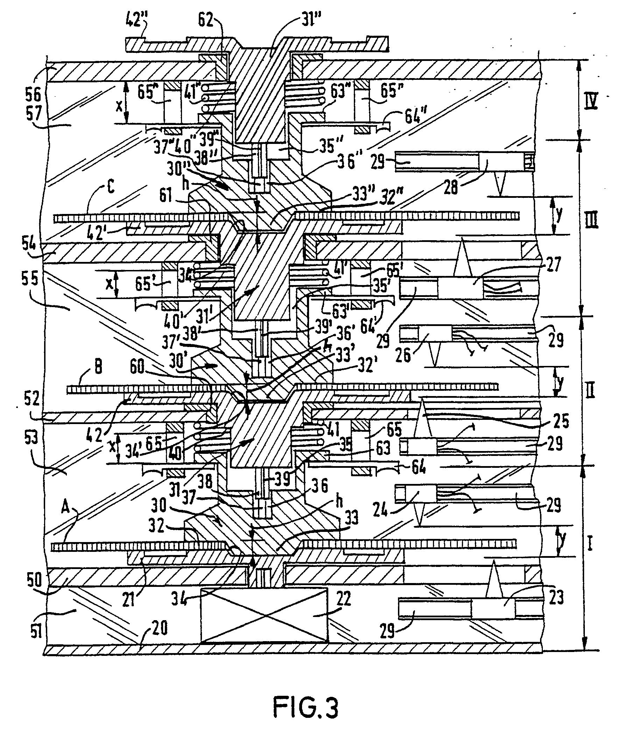

Dans l'exemple de la figure 3, on a prévu trois video-disques superposés respectivement A, B et C correspondant à trois "étages" ou "modules" respectivement I, II et III.

Le module I est une platine qui comprend une embase 20, un plateau rotatif 21 et un moteur 22 pour l'entraînement du plateau 21.

Chaque module I, II et III comprend deux analyseurs d'informations respectivement 23-24, 25-26 et 27-28 correspondant chacun à une seule face de l'un des video-disques A, B et C.

Chaque analyseur d'informations est d'un type connu en lui-même et coopère avec des guides 29 afin que, par des moyens également connus, chaque analyseur puisse être déplacé radialement par rapport au video-disque correspondant, de telle sorte que chacun des deux analyseurs correspondant à un même video-disque puisse être déplacé indépendamment de l'autre pour pouvoir analyser n'importe laquelle des informations que la face du video-disque comprend.

Les video-disques devant être entraînés à une vitesse importante, (de l'ordre de 1.500 à 1.800 tours/minute), il est indispensable de les maintenir pressés contre le plateau d'entraînement.

Ici, on obtient à la fois cette pression et la transmission de mouvement aux différents mmodules à partir du seul moteur 22 en établissant une colonne centrale dont la hauteur varie en fonction du nombre de modules superposés et qui est constituée par une succession de pièces respectivement 30 et 31.

La pièce 30 la plus basse correspondant au video disque A prend appui sur celui-ci par un épaulement 32 dont le diamètre est au plus égal à la partie centrale du video-disque afin de ne pas empêcher l'analyseur 24 de parvenir jusqu'aux informations les plus proches du centre.

L'épaulement 32 entoure une partie centrale 33 qui passe par le trou central du video-disque A et pénètre en partie dans le plateau 21 muni, à cet effet, d'un logement correspondant 34.

La partie 33 et le logement 34 sont avantageusement de forme tronconique afin de permettre un bon centrage de la picèe 30 par rapport au plateau 21.

En outre, comme la pièce 30 doit être entraînée en rotation par le plateau 21 en même temps que le video-disque A, il faut utiliser des moyens de tous types connus garantissant cette rotation et qui pourraient être seulement constitués par une surface anti-dérapante interposée entre la partie 33 et le logement 34 mais qui, de préférence, sont constitués par des organes pénétrant les uns dans les autres tels que es dents ou des créneaux prévus à la périphérie de la partie 33 et du logement 34, ou par au moins un doigt s'étendant radialement pour provoquer une solution de continuité au contour circulaire de la partie 33 et du logement 34.

La pièce 30 présente à sa partie supérieure un logement central 35 prolongé par un trou borgne 36 non circulaire et/ou muni d'au moins une rainure 37. La pièce 31 pénètre et coulisse dans le logement 35. Elle présente une tige 38 munie d'un ou plusieurs reliefs 39 correspondant exactement à la ou aux rainures 37 afin que la rotation de la pièce 30 soit transmise à la pièce 31 tout en autorisant le coulissement de cette dernière par rapport à la pièce 30.

La pièce 31 présente un épaulement 40 formant butée pour limiter la course de la pièce 30. Un ressort de compression 41 est intercalé entre le dessus de la pièce et le dessous de l'embase supérieure.

La pièce 31 constitue à sa partie supérieure un plateau d'entraînement 42 du même type que le plateau 21 afin de pouvoir recevoir le video-disque B dans les mêmes conditions que le video-disque A.

Le video-disque B doit, lui aussi, être maintenu pressé contre le plateau d'entraînement 42 comme le video-disque A est pressé contre le plateau 21 par le ressort 41.

C'est pourquoi on place au-dessus du video-disque B une pièce 30' identique à la pièce 30 afin de former un tronçon de colonne identique au précédent et correspondant cette fois-ci au module III et non plus au module II.

Les pièces se correspondant exactement, on a utilisé pour le module III les mêmes références que pour le module II mais affectées d'une (').

Le plateau 42' solidaire de la pièce 31' doit recevoir le video-disque C et ce dernier doit être maintenu pressé contre le plateau 42' au même titre que les autres video-disques, de sorte que l'on utilise, ici encore, une pièce 30" dont la partie centrale 33" pénètre dans un logement 34" de la pièce 31'.

On a ainsi terminé l'empilement nécessaire à la constitution des trois modules I, II et III mais pour exercer une pression sur le video-disque C, un ressort 41" doit avoir un point d'appui et pour cela on utilise un couronnement IV de l'ensemble, comprenant lui aussi une embase similaire aux précédentes.

Avec ce montage, on constate que les ressorts 41, 41' et 41" exercent une pression dans le sens longitudinal de la colonne centrale et vers le plateau 21 du module I.

La puissance de ces ressorts est choisie de telle manière que la pression exercée sur chaque video-disque soit celle qui est nécessaire et suffisante, sans excès.

Chaque module comprend, comme on l'a vu, un plateau rotatif et des éléments d'entraînement en rotation mais il est nécessaire, également, qu'à chaque module corresponde une embase afin que tous les modules puissent être superposés et constituent une structure rigide.

Ainsi, le module I comprend une embase 50 et une paroi latérale 51, le module II comprend une embase 52 et une paroi latérale 53 et le module III comprend une embase 54 et une paroi latérale 55, le couronnement comprenant une embase 56 et une paroi latérale 57.

Les embases 52, 54 et 56 sont utilisées comme éléments de centrage de la colonne et, pour cela, il faut que les pièces respectivement 31, 31' et 31" soient maintenues par leur périphérie. Afin d'éviter des frottements entre les pièces fixes et mobiles, on prévoit des pièces intermédiaires qui peuvent, le cas échéant, être constituées par des roulements à billes.

Ici, ces pièces intermédiaires sont des couronnes lisses respectivement 60, 61 et 62 montées dans des passages de l'embase 52, de l'embase 54 et de l'embase 56.

Il est nécessaire de pouvoir accéder indifféremment à n'importe lequel des video-disques en place, notamment en vue de le changer, et il faut donc pouvoir les désolidariser chacun du plateau d'entraînement correspondant.

A cette fin, on agit sur la pièce 30, ou 30' ou 30'' pour libérer soit le video-disque A, soit le video-disque B soit le video-disque C. Pour cela, ces pièces comportent une couronne respectivement 63, 63' et 63'' servant de point d'appui à un effort de soulèvement soit direct, soit par l'intermédiaire d'un levier 64, 64' ou 64'' maintenu par des guides 65, 65' et 65'' et, cela en comprimant le ressort 41 ou 41' ou 41'', la pièce soulevée coulissant d'une part sur la pièce 31, 31' ou 31'' par les parois du logement 35, 35' ou 35'' et d'autre part sur la tige 38, 38' ou 38'' par le trou borgne 36, 36' ou 36''.

Pour cela, la distance x selon laquelle les pièces peuvent être soulevées en comprimant les ressorts 41, 41' et 41'' doit être au moins égale à la hauteur h des parties 33, 33' et 33'' des pièces 30, 30' et 30''.

Par ailleurs, l'écartement y entre deux analyseurs associés au même video-disque : 23 et 24 peur le video-disque A, 25 et 26 pour le video-disque B et 27 et 28 pour le video-disque C doit être suffisant pour qu'un video-disque puisse être mis en place et retiré sans risquer d'entrer en contact avec l'analyseur supérieur car cela pourrait avoir pour conséquence de détériorer le video-disque et/ou l'analyseur.

En outre, il est nécessaire que l'écartement qui subsiste entre la face supérieure d'un video-disque et l'analyseur d'informations supérieur correspondant soit au moins égal à la distance x afin que lors du soulèvement d'un tronçon de colonne, le video-disque ne puisse pas entrer au contact de cet analyseur.

Avec le dispositif qui vient d'être décrit, on voit que les video-disques sont constamment en position d'être mis en rotation et que, par conséquent, les analyseurs d'informations ne peuvent accéder en permanence qu'à ceux des video-disques qui sont en place par opposition à ceux qui sont, le cas échéant, conservés en stock.

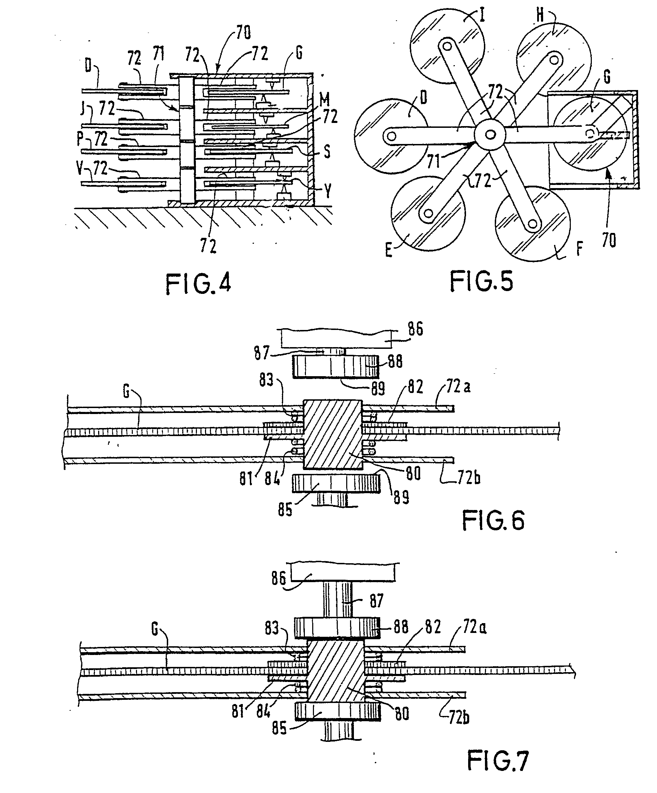

Au contraire, selon le mode de réalisation de la figure 4, il est possible d'explorer les informations que contiennent un nombre de video-disques beaucoup plus grand que celui qu'il est possible d'obtenir par superposition de modules.

Selon ce mode de réalisation, les video-disques sont associés à des moyens de déplacement individuels distincts de ceux qui sont prévus pour leur entrainement en rotation, afin de pouvoir être très facilement et automatiquement mis en position de stockage ou en position de lecture.

Pour cela, on différencie les moyens de déplacement en rotation des moyens de lecture (c'est-à-dire les analyseurs d'informations).

Le dispositif comprend alors un bâti 70 qui maintient une colonne 71 formée de plusieurs tronçons pivotants indépendants portant chacun plusieurs bras radiaux 72.

Chaque bras 72 porte à son extrémité un video-disque D, E, F... etc. maintenu par son centre, ainsi que cela sera expliqué plus loin.

Chacun des quatre tronçons de la colonne 71 peut, par exemple, être formé par un moteur électrique du type connu selon lequel le rotor intérieur est maintenu fixe tandis que le stator extérieur est monté tournant et, ici, solidaire de six bras 72.

Ainsi, il est possible de mettre en route et d'arrêter indépendamment chacun des quatre tronçons de la colonne 71 selon le video-disque qui doit être amené en position de lecture.

Sur la figure 5, on voit que pour le premier étage, le video-disque G est en position de lecture tandis que les cinq autres video-disques H, I, D, E et F sont en position dite de "stockage".

Les six disques d'un même niveau constituent une série et l'on peut en prévoir une seule ou plusieurs. Dans ce dernier cas, les moyens de déplacement indépendants, à savoir les tronçons de la colonne 71 et les bras 72 correspondants sont disposés parallèlement.

Bien entendu, il pourrait n'y avoir qu'une seule série comprenant un seul tronçon de colonne 71 et des bras 72.

Le pivotement d'un seul tronçon de la colonne 71 correspond par conséquent au déplacement de six video-disques selon un cercle concentrique à la colonne 71 et l'on peut utiliser pour cela des moteurs du type pas-à-pas par exemple.

En revanche, le video-disque en position de lecture devant être entraîné en rotation à une vitesse qui est actuellement de l'ordre de 1.500 tours/minute, le bâti 70 contient soit un moteur et des embrayages individuels pour chacun des quatre video-disques, soit quatre moteurs indépendants.

En se reportant aux figures 6 et 7, on voit comment l'entraînement en rotation d'un video-disque peut être obtenu.

On remarque, tout d'abord, que chaque bras 72 comporte ici deux branches parallèles 72a et 72b espacées et entre lesquelles se trouve un video-disque, en l'occurrence le video-disque G. Les deux branches 72a et 72b sont percées de trous circulaires situés en regard et dans lesquels est engagé un noyau 80 muni d'une couronne 81 et recevant une autre couronne 82, indépendante de celle-ci, deux ressorts 83 et 84 étant interposés respectivement entre la branche 72a et la couronne 82 et entre la branche 72b et la couronne 81.

L'action des ressorts 83 et 84 a pour effet de pincer le video-disque G entre les couronnes 81 et 82, la surface de ces couronnes qui doit être au contact du video-disque pouvant être anti-dérapante.

L'ensemble de ces organes permet de maintenir le video-disque et d'assurer sa rotation.

Pour cela, le bâti 70 est muni, pour chaque étage, d'un plateau rotatif 85 relié à un moteur ou à un embrayage afin d'être entraîné en rotation à la vitesse voulue.

A l'aplomb du plateau rotatif 85, se trouve un organe de pression tel qu'un vérin 86 dont la tige 87 est munie d'une tête 88.

Le plateau rotatif 85 et la tête 88 peuvent avantageusement avoir une surface anti-dérapante soit naturellement, soit par traitement, soit par apposition d'un matériau rapporté 89.

Le fonctionnement de ce dispositif est le suivant :

Sur la figure 6, le vérin 86 a été commandé de telle sorte que sa tige 87 soit en position de retrait, de sorte que l'ensemble du bras 72 et du video-disque G peut librement être déplacé par pivotement du tronçon correspondant de la colonne 71 et l'on suppose, en regard de la figure 6, que le video-disque G est dans sa phase de mise en place.

Dès que le moteur du tronçon de la colonne 71 a atteint la position qui correspond à l'alignement du plateau rotatif 85, du noyau 80 et de la tête 88, il est arrêté et l'ensemble des organes se trouve dans la position de la figure 6, sur laquelle on remarque qu'il existe un jeu entre la face inférieure du noyau 80 et la face supérieure du plateau rotatif 85 afin que les déplacements latéraux des bras 72 et de leur noyau 80 se fassent en toute sécurité, sans possibilité d'accrochage du plateau rotatif 85 malgré le ballant possible du bras 72.

Lorsque le noyau 80 est en bonne position, le vérin 86 est commandé de telle sorte que sa tige 87 soit en position d'extraction, de sorte que la tête 88 entre en contact avec la partie supérieure du noyau 80 et applique celui-ci contre le plateau rotatif 85.

Le plateau 85 est alors mis en rotation et entraîne de ce fait le noyau 80 ainsi que le video-disque G puisque ce dernier est maintenu pressé contre la couronne 81 par le ressort 83.

Le ressort 84, quant à lui, assure le montage flottant du noyau 80 par rapport aux deux branches 72a et 72 b du bras 72 et permet au noyau 80 d'être toujours rigoureusement appliqué contre le plateau rotatif 85 même s'il existe un petit décalage angulaire entre la face inférieure du noyau 80 et la face supérieure du plateau 85, décalage qui peut provenir du ballant du bras 72. On est ainsi assuré que le video-disque G est toujours situé dans un plan parallèle à celui du plateau 85 et que la lecture des informations qu'il porte, par les analyseurs d'informations sera parfaite.

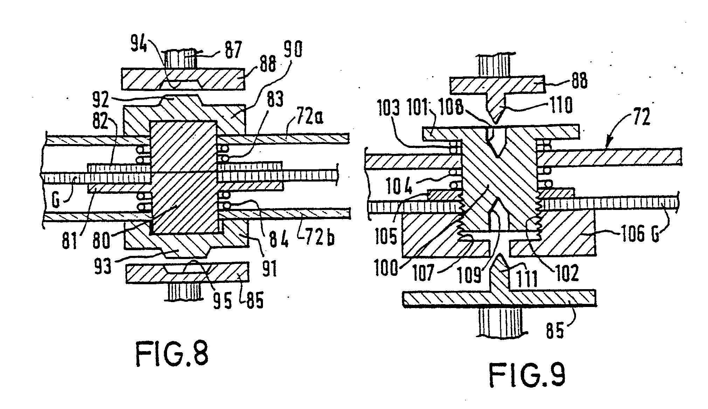

En se reportant maintenant à la figure 8, on voit une variante du mode de réalisation précédent selon laquelle le noyau 80 est rendu solidaire de deux pièces extérieures 90 et 91 qui ne sont pas bloquées contre les branches 72a et 72b afin de permettre le montage flottant du noyau 80 et qui portent chacune un relief central respectivement 92 et 93.

Le plateau 85 d'une part et la tête 88 d'autre part présentent un creux central respectivement 94 et 95 correspondant aux reliefs 92 et 93 afin d'assurer un entraînement plus précis que celui qui peut être obtenu en rendant simplement anti-dérapantes des surfaces planes, comme cela a été décrit en regard des figures 6 et 7.

A cet effet, les reliefs 92 et 93 ainsi que les creux 94 et 95 peuvent être crénelés ou être munis d'un relief radial augmentant encore la précision de l'entraînement.

En se reportant à la figure 9, on voit un autre mode de réalisation selon lequel le bras 72 ne présente qu'une seule et unique branche traversée d'un trou circulaire dans lequel est engagé un noyau 100 muni d'une couronne 101 à l'une de ses extrémités tandis que son extrémité opposée est munie d'un filetage 102.

Deux ressorts sont placés autour du noyau 100, respectivement 103 entre la couronne 101 et le bras 72, et 104 entre le bras 72 et une couronne 105 montée librement mais avantageusement reliée au ressort 104 pour qu'elle ne s'en échappe pas accidentellement.

Pour mettre en place un video-disque, ici le video-disque G, on engage celui-ci sur le noyau 100, contre la couronne 105 puis l'on visse sur le filetage 102 un écrou 106 qui coopère avec le filetage 102 par un taraudage 107 de telle manière que l'écrou 106 arrive en butée sans comprimer totalement le ressort 104.

Il est avantageux de prévoir le filetage 102 et le taraudage 107 avec un pas de sens inverse de celui de la rotation du video-disque G afin que lorsque ce dernier est effectivement entraîné il n'ait pas tendance à desserrer l'écrou 106.

Le noyau 100 est percé de deux trous borgnes à fond conique respectivement 108 et 109, ce dernier étant situé en regard d'un passage de l'écrou 106. Le plateau 85 ainsi que la tête 88 sont munis de pivots centraux 110 et 111 devant pénétrer respectivement dans les logements 108 et 109 lorsque le vérin est actionné, ce qui a pour conséquence que la tête 88 est au contact du noyau 100 et applique l'ensemble contre le plateau rotatif 85.

Comme on l'a déjà indiqué plus haut, on peut soit augmenter le coefficient de frottement entre le plateau 85 et l'écrou 106 d'une part et entre la tête 88 et le noyau 100 d'autre part, soit prévoir des organes qui s'interpénètrent.

On remarque qu'avec ce mode de réalisation, on a choisi la solution connue en soi qui consiste à prévoir des reliefs 110 et 111 au lieu de prévoir des creux 94 et 95 (figure 8) ou de simples surfaces planes (figures 6 et 7).

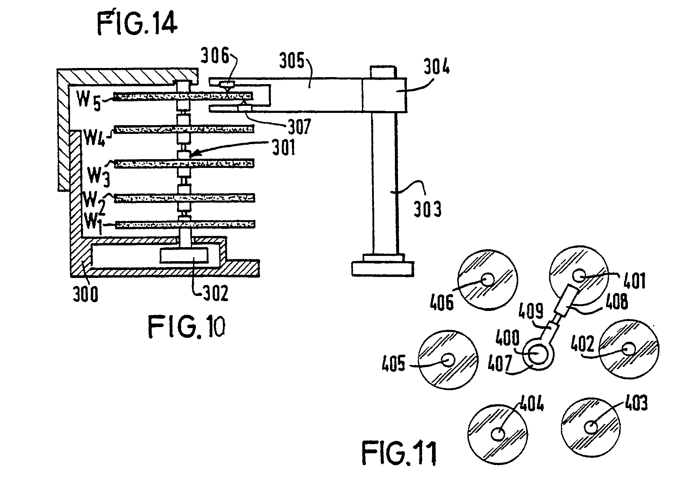

En se reportant maintenant aux figures 10 et 11, on voit un mode de réalisation de l'invention selon lequel les video-disques sont associés en permanence à des moyens de déplacement exclusivement rotatifs tandis que les analyseurs d'informations sont mobiles.

Le dispositif comprend un bâti 300 supportant une colonne 301 constituée de préférence par empilement de tronçons identiques afin de pouvoir ajouter des modules au fur et à mesure des besoins.

Chaque tronçon porte un video-disque W, le tronçon inférieur étant en prise avec un moteur d'entraînement 302 par lequel tous les video-disques sont entraînés ensemble.

A côté de la colonne 300, se trouve un montant 303 sur lequel un support 304 est monté au moyen de tous mécanismes connus pour pouvoir être entraîné verticalement et soit radialement, soit en pivotement (c'est cette dernière solution qui est représentée ici). Sur ce support 304 est assujetti un bras 305 portant un couple d'analyseurs d'informations 306 et 307 convenablement écartés l'un de l'autre pour pouvoir être placés en position de lecture des deux faces d'un même video-disque.

Le fonctionnement de ce dispositif est le suivant :

Dans la position représentée sur la figure 10, le bras 305 a été mis en place pour la lecture du video-disque W5. Le déplacement des analyseurs 306 et 307 est assuré individuellement.

Lorsque l'ordinateur de contrôle détermine que des informations à lire se trouvent sur un autre video-disque, il provoque d'abord le pivotement (ou le retrait radial) du bras 305 pour être situé hors du contour des video-disques, puis l'abaissement du support 304 le long de la colonne 303 jusqu'au niveau du video-disque voulu, puis le pivotement (ou l'avancement radial) du bras 305 dans le sens inverse du précédent pour amener les analyseurs 306 et 307 en position de lecture de ce video-disque.

Sur la figure 10 on n'a représenté qu'un seul ensemble de video-disques sur une seule colonne 301. La capacité de ce dispositif est donc limitée à la hauteur possible pour l'empilement de tronçons de colonne et pour le montant 303.

Or, il existe des applications de l'invention pour lesquelles une plus grande capacité est nécessaire. Une solution à ce problème est représentée sur la figure 11.

Cette solution suppose la présence d'un montant 400 analogue au montant 303 mais associé à plusieurs colonnes 401 à 406 destinées à recevoir chacune plusieurs video-disques.

Sur le montant 400, est monté un support 407 pour un bras 408 analogue au bras 305.

On comprend qu'ici la capacité de stockage et d'exploitation d'informations peut être beaucoup plus importante que dans le cas précédent puisque le bras 408 peut être amené en position de lecture de n'importe quel video-disque de n'importe quelle colonne.

Ici, le bras 408 est monté de manière télescopique sur un embout 409 du support 407 mais, dans la pratique, le bras 408 peut n'être que pivotant, les changements de niveau du support 407 se faisant lorsque le bras 408 se trouve entre deux ensembles de video-disques.

Ici également on peut prévoir d'ajouter des bras supplémentaires au fur et à mesure des besoins de l'utilisateur afin que celui-ci bénéficie d'un dispositif modulaire.

Naturellement, on pourrait prévoir d'autres cinématiques permettant de faire passer une pluralité de video-disques d'une position de stockage dans laquelle ils sont rangés de la manière la moins encombrante possible, à une position de lecture au moyen d'au moins une platine.

Il faut remarquer que l'on peut prévoir une exploitation intensive des video-disques, par exemple pour permettre à un assez grand nombre d'usagers d'avoir accès à une même face d'un video-disque, en prévoyant pour chaque platine non plus un seul couple d'analyseurs d'informations (un analyseur pour une face et l'autre pour l'autre face) mais une pluralité de couples disposés radialement.

Il résulte de la description ci-dessus que l'invention permet de rendre automatique l'accès à un nombre plus ou moins grand de video-disques sans avoir à multiplier le nombre de lecteurs indépendants, ce qui conduit en outre à des économies très sensibles.

Il est ainsi possible de disposer d'un nombre très important de documents enregistrés et d'y accéder rapidement en utilisant les moyens informatiques modernes.

L'invention peut particulièrement être appliquée, par exemple, à la constitution de banques d'images auxquelles on accède soit image par image, soit par séquences de plusieurs images qui se suivent.

L'invention permet, par exemple dans des hôtels, de présenter individuellement un même film, ou plusieurs films différents, à une multitude de clients en toute indépendance de temps, c'est-à-dire que chaque client commence à regarder le film à son début quel que soit le moment auquel il accède au système, bien qu'il n'y ait qu'une seule unité centrale.

On peut ainsi prévoir, par exemple, un contrôle d'identité assez facile dans un délai de quelques secondes en plaçant un dispositif contenant un nombre considérable de fiches signalétiques à des postes frontières. La banque d'images proprement dite peut être située à un endroit donné, chaque poste frontière étant équipé d'un ou plusieurs terminaux.

Parmi les applications de l'invention particulièrement intéressantes, on peut citer celles qui concernent le domaine cinématographique.

En effet, grâce au fait que l'on accède rapidement à une très grande quantité d'images stockées sur les vidéo-disques, on peut constituer des maquettes de futurs films en réalisant une sorte de "copie conforme" du film avant que l'original existe, c'est-à-dire avant de couper le négatif et sans passer par l'actuelle copie positive de travail.

Les images filmées sont stockées sur video-disques sans aucune coupure, et le montage consiste à sélectionner, en utilisant un simple clavier d'informatique, les plans et/ou les séquences désirés.

On peut ainsi faire tous les changements voulus sur la maquette du futur film dans un laps de temps de quelques secondes pour chaque changement.

Toutes les opérations habituelles exécutées sur une table de montage, par exemple pour le déroulement de la pellicule, la synchronisation images-son, le collage, etc. sont supprimées.

On peut archiver des films en conservant en lieu sûr des video-disques qui constituent en eux-mêmes un support de longue durée, apportant ainsi une solution au problème de la périssabilité des films.

On remarque que les video-disques stockés dans une installation conforme à l'invention sont particulièrement bien protégés puisqu'il n'est pas nécessaire de les manipuler et qu'ils sont d'une accessibilité quasi immédiate se mesurant en secondes.

On peut également utiliser un dispositif conforme à l'invention pour la vente dite de "stock shot" (images d'archives) en utilisant uniquement une ou plusieurs images représentatives d'un document filmé sur pellicule, au lieu de devoir prendre toute sa longueur, comme c'est le cas actuellement. Les utilisateurs peuvent effectuer leurs recherches d'une manière extrêmement rapide et commode sans utiliser de table de montage.

Lorsque les plans ont été identifiés ainsi, on sort les positifs pour visionner en projection toute la longueur voulue.

En d'autres termes, on procède à une sélection ultra rapide puis au visionnement normal, et l'on gagne ainsi un temps très important sans modifier en quoi que ce soit les opérations de projection.

On peut également stocker sur video-disque des images synthétiques de base résultant, par exemple, d'opérations de conception assistée par ordinateur ("CAO") et procéder à une recherche ainsi qu'à une combinaison extrêmement rapides de ces images.

La grande capacité de stockage et la possibilité de prévoir plusieurs accès simultanés permet aussi d'organiser une videothèque ou banque d'images telle qu'elle doit l'être pour une station de télévision et de donner aux téléspectateurs la possibilité de consultations individuelles simultanées. Cela signifie, en clair, que chaque téléspectateur peut composer son programme indépendamment des autres, ce que l'on appelle la télévision "à la demande". La station peut, pour sa part, éviter de publier un catalogue de ses programmes ou, tout au moins, peut proposer un catalogue disponible sur écran et, donc, tenu à jour instantanément, sans retards dus à l'impression et à la diffusion de documents sur papiers.

Il faut remarquer que la possibilité de lire simultanément ou indépendamment les deux faces d'un même disque, jointe à la possibilité de lire aussi plusieurs disques, procure l'avantage spécifique d'explorer les informations "en continu", sans interruption due au saut de la tête de lecture d'une face à l'autre, d'un disque à l'autre. C'est ce qui permet l'exploration rapide et intensive d'une banque de données car quel que soit le nombre de disques qu'elle contient elle se comporte alors comme possédant toutes les informations sur un seul très grand disque. S'agissant d'images, cet avantage est déterminant pour augmenter radicalement les possibilités de nouvelles applications et de nouvelles méthodes.

Naturellement, le dispositif conforme à l'invention est utilisable aussi bien pour l'enregistrement que pour la lecture d'informations.

Il est également applicable aux autres types de disques et tout particulièrement à ceux nommés "compact disques".

## Revendications

1. Lecteur de vidéo-disques du type comprenant plusieurs disques (7) associés en permanence à des moyens de mise en rotation, au moins un bras (305) mobile dans un plan parallèle à celui des disques et dans un plan perpendiculaire à celui des disques, deux analyseurs (306, 307) d'informations montés sur le bras et destinés à lire des informations portées par deux faces différentes de disque (W1-W5), des moyens de sélection des informations ainsi que des moyens de commande des analyseurs d'informations, contrôlés par un ordinateur, caractérisé en ce que les analyseurs d'informations sont montés mobiles indépendamment les uns des autres et indépendamment dudit bras, de telle sorte que deux analyseurs puissent lire deux faces d'un même disque soit simultanément, soit isolément, tous ces disques et le bras étant disposés de telle sorte que toutes leurs faces soient accessibles aux analyseurs d'information par mouvement du bras, chacun des disques étant individuellement amovible par rapport à tous les autres.

2. Lecteur selon la revendication 1, caractérisé en ce que les moyens de mise en rotation comprennent un seul ensemble moteur pour l'entraînement en rotation d'une colonne composée d'au moins deux pièces (5,4,6 sur la figure 2) qui doivent recevoir un disque amovible (7) accessible par ses deux faces à des analyseurs d'informations et qui présentent chacune une extrémité munie d'organe de couplage mécanique destinés à une autre pièce identique mobile pour un autre disque (7) également amovible, des moyens étant prévus aux deux extrémités de la colonne pour maintenir entre elles les pièces situées de part et d'autre d'une interruption complète de la colonne provenant du retrait d'au moins une pièce, chacune desdites pièces et chacun des disques étant ainsi amovibles indépendamment des autres.

3. Lecteur selon la revendication 1, caractérisé en ce qu'il comprend au moins un module (I-IV sur la figure 3) susceptible d'être associé à d'autres afin de rendre le lecteur évolutif par l'apport d'éléments au fur et à mesure des besoins d'un usager.

4. Lecteur selon la revendication 1, caractérisé en ce qu'il comprend un support pivotant et comportant des bras radials (72 sur les figures 4-8). chaque bras est traversé d'un trou circulaire situé près de son extrémité libre et dans lequel un noyau (80;100) également circulaire doit être engagé librement pour traverser à la fois le bras et un disque (G), des moyens étant prévus d'une part pour solidariser le noyau et le disque et d'autre part pour solidariser le noyau et le plateau rotatif (85) d'une platine (86-89, 91-95, 108-110).

5. Lecteur selon la revendication 4, caractérisé en ce que chaque bras (72) comporte deux branches parallèles espacées (72a et 72b) entre lesquelles doit être inséré un disque (G) et traversées de deux trous circulaires situés en regard, le noyau (80) devant traverser à la fois une branche (72a) du bras (72), un disque (G) et l'autre branche (72b) du bras (72).

6. Lecteur selon la revendication 4, caractérisé en ce que les moyens pour solidariser le noyau (80) et le vidéo-disque (G) comprennent une première couronne (81) solidaire du noyau (80) et sur laquelle le disque (G) doit être pose' ainsi qu'une seconde couronne (82) devant être posée sur le disque (G), des ressorts de compression (83 et 84) étant placés à l'extérieur de ces couronnes (81 et 82) en vue d'exercer deux efforts destinés à appliquer le disque (G) et la première couronne (81) contre l'autre (82).

7. Lecteur selon la revendication 4, caractérisé en ce que les moyens pour solidariser le noyau (80) et le plateau rotatif (85) comprennent des organes mobiles (87-88) entre une première position dite neutre dans laquelle ils ménagent au-delà du plateau (85) un espace suffisant pour la mise en place et le retrait d'un bras (72) portant un disque (G) et une seconde position dite active dans laquelle ils sont approchés du plateau (85) pour y appliquer le noyau (80) rendu solidaire d'un disque (G).

8. Lecteur selon la revendication 4, caractérisé en ce que le support central est formé par au moins deux tronçons superposés indépendants, les bras (72) et les disques (D à I, J, P Y,) qu'il porte étant alors disposés parallèlement les uns aux autres en au moins deux séries distinctes, le lecteur comprenant autant de platines parallèles qu'il y a de tronçons (71) afin que plusieurs disques (D à I, J, P, Y,) puissent être analysés simultanément.

9. Lecteur selon la revendication 1, caractérisé en ce qu'un disque (sur la figure 10, W1 à W5) est associé à des moyens de déplacement en rotation (301) tandis qu'au moins un couple d'analyseurs d'informations (306, 307) est associé à des moyens de déplacement (304-305, 407-408) susceptibles de placer ledit couple sélectivement en position de lecture de l'un quelconque du disque (W1 à W5).

10. Lecteur selon la revendication 9, caractérisé en ce que les moyens de déplacement du couple d'analyseurs d'informations sont constitués par un bras (305,408) montés mobiles sur un montant (303,400) pour pouvoir être entraînés longitudinalement soit radialement, soit en pivotement par rapport audit montant.

## Claims

1. Video disc reader of the type comprising several discs (7) permanently associated with rotating means, at least one arm (305) movable in a plane parallel to that of the discs and in a plane perpendicular to that of the discs, two data analysers (306, 307) mounted on the arm for reading data carried by two different faces of a disc (W1-W5), means for selecting the data as well as means for controlling the data analysers, controlled by a computer, characterised in that the data analysers are movable independently of each other and independently of said arm, in such, a way that two analysers can read two faces of the same disc either simultaneously or separately, all these discs and the arm being arranged in such a way that all their faces are accessible to the data analyzers by movement of the arm, each of the discs being individually removable in relation to all the others.

2. Reader according to claim 1, characterised in that the rotating means comprise a single motor assembly for rotation of a column composed of two or more pieces (5, 4, 6 in Fig. 2) which are to receive a removable disc (7) accessible by both of its faces to data analysers and each comprising one end provided with a mechanical coupling member intended for another identical movable piece for another, also removable disc (7), means being provided at both ends of the column for holding together the pieces situated on either side of a complete interruption of the column arising from the withdrawal of at least one piece, each of said pieces and each of the discs being thus removable independently of the others.

3. Reader according to claim 1, characterised in that it comprises at least one module (I-IV in Fig. 3) capable of being associated with others in order to render the reader open-ended for the addition of elements according to the needs of a user.

4. Reader according to claim 1, characterised in that it comprises a pivoting support comprising radial arms (72 in Figs. 4-8) and through each arm passes a circular hole situated close to its free end, in which a core (80; 100), also circular, is to be engaged freely in order to pass through the arm and a disc (G) simultaneously, means being provided on the one hand for rigidly connecting the core and the disc and on the other hand for rigidly connecting the core and the rotary platform (85) of a deck (86-89, 91-95, 108-110).

5. Reader according to claim 4, characterised in that each arm (72) comprises two parallel spaced-apart branches (72a and 72b) between which is to be inserted a disc (G) and through which pass two circular holes situated opposite each other, wherein the core (80) is to pass simultaneously through one branch (72a) of the arm (72), a disc (G) and the other branch (72b) of the arm (72).

6. Reader according to claim 4, characterised in that the means for rigidly connecting the core (80) and the disc (G) comprise a first ring (81) which is rigidly connected to the core (80) and on which the disc (G) is to be placed as well as a second ring (82) to be placed on the disc (G), compression springs (83 and 84) being placed on the outside of these rings (81 and 82) in order to exert two forces for applying the disc (G) and the first ring (81) to the other one (82).

7. Reader according to claim 4, characterised in that the means for rigidly connecting the core (80) and the rotary platform (85) comprise members (87-88) movable between a first socalled neutral position in which they form beyond the platform (85) a space sufficient for the installation and withdrawal of an arm (72) carrying a disc (G) and a second so-called operative position in which they are close to the platform (85) in order to apply thereto the core (80) rigidly connected to a disc (G).

8. Reader according to claim 4, characterised in that the central support is formed by two or more superimposed independent sections, the arms (72) and the discs (D to I, J, P, Y) which they carry being then arranged parallel to each other in to or more separate series, the reader comprising as many parallel decks as there are sections (71) so that several discs (D to I, J, P, Y) can be analysed simultaneously.

9. Reader according to claim 1, characterised in that a disc (in Fig. 10, W1 to W5) is associated with rotating means (301) while at least one pair of data analysers (306, 307) is associated with displacement means (304-305, 407-408) capable of placing said pair selectively in the position for reading any one of the discs (W1 to W5).

10. Reader according to claim 9, characterised in that the means for displacement of the pair of data analysers consist of an arm (305, 408) movable on a frame (303, 400) so as to be capable of being driven longitudinally either radially, or in pivot movement relative to said frame.

## Patentansprüche

1. Lesegerät für Videoplatten von einer Bauart mit einer Mehrzahl von Platten (7), die ständig mit Mitteln zum Versetzen in eine Drehung verbunden sind, wenigstens einem Arm (305), der in einer zu derjenigen der Platten parallelen Ebene und in einer zu derjenigen der Platten senkrechten Ebene beweglich ist, zwei Informations-Analysatoren (306, 307), die an dem Arm angebracht und dazu vorgesehen sind, die von zwei verschiedenen Seiten der Platte (W1-W5) getragenen Informationen zu lesen, Mitteln zum Wählen der Informationen sowie Mitteln zum Steuern der Informations-Analysatoren, die von einem Rechner gesteuert werden, dadurch gekennzeichnet, daß die Informations-Analysatoren unabhängig voneinander und unabhängig vom Arm beweglich so angebracht sind, daß zwei Analysatoren zwei Seiten derselben Platte entweder gleichzeitig oder getrennt lesen können, wobei alle diese Platten und der Arm so angeordnet sind, daß von den Informations-Analysatoren durch die Bewegung des Arms auf sämtliche ihrer Seiten zugegriffen werden kann, wobei die Platten bezüglich aller anderen einzeln abnehmbar sind.

2. Lesegerät gemäß Anspruch 1, dadurch gekennzeichnet, daß die Mittel zum Versetzen in eine Drehung eine einzige Motoreinheit umfassen, um eine Säule in Drehrichtung anzutreiben, die aus wenigstens zwei Stücken (5, 4, 6 in Fig. 2) zusammengesetzt ist, die eine abnehmbare Platte (7) aufnehmen sollen, auf deren zwei Seiten Informations-Analysatoren zugreifen können, und die jeweils ein mit einem mechanischen Kopplungselement versehenes Ende aufweisen, das für ein anderes, identisches bewegliches Teil für eine andere ebenfalls abnehmbare Platte (7) bestimmt ist, wobei an den zwei Enden der Säule Mittel vorgesehen sind, um die auf beiden Seiten einer vollständigen Unterbrechung der Säule angeordneten Teile zwischen sich zu halten, wobei die Unterbrechung durch das Herausnehmen wenigstens eines Stückes entsteht, so daß jedes der Teile und jede der Platten unabhängig von den anderen abnehmbar ist.

3. Lesegerät gemäß Anspruch 1, dadurch gekennzeichnet, daß es wenigstens einen Modul (I-IV in Fig. 3) umfaßt, der dazu geeignet ist, mit anderen verbunden zu werden, um das Lesegerät durch Hinzufügung von Elementen je nach Bedarf eines Benutzers erweiterbar zu gestalten.

4. Lesegerät gemäß Anspruch 1, dadurch gekennzeichnet, daß es einen schwenkbaren und radiale Arme enthaltenden Träger (72 in den Figuren 4-8) umfaßt, wobei jeder Arm von einem in der Nähe seines freien Endes befindlichen kreisförmigen Loch durchsetzt wird, in das ein ebenfalls kreisförmiger Kern in freien Eingriff gelangen soll, um gleichzeitig den Arm und seine Platte (G) zu durchsetzen, wobei Mittel vorgesehen sind, um einerseits den Kern und die Platte und andererseits den Kern und die drehbare Scheibe (85) mit einer Grundplatte (86-89, 91-95, 108-110) zu verbinden.

5. Lesegerät gemäß Anspruch 4, dadurch gekennzeichnet, daß jeder Arm (72) zwei parallele und in einem gegenseitigen Abstand befindliche Schenkel (72a und 72b) aufweist, zwischen denen eine Platte (G) eingesetzt werden soll und die von zwei einander gegenüber angeordneten kreisförmigen Löchern durchsetzt werden, wobei der Kern (80) gleichzeitig einen Schenkel (72a) des Arms (72), eine Platte (G) und den anderen Schenkel (72b) des Arms (72) durchsetzen soll.

6. Lesegerät gemäß Anspruch 4, dadurch gekennzeichnet, daß die Mittel zum Verbinden des Kerns (80) und der Platte (G) einen mit dem Kern (80) verbundenen ersten Kranz (81), auf den die Platte (G) sowie ein zweiter Kranz (82) gelegt werden sollen, umfassen, wobei vor dem Legen des zweiten Kranzes (82) auf die Platte (G) außerhalb dieser Kränze (81 und 83) Kompressionsfedern (83 und 84) angeordnet werden, um zwei bestimmte Kräfte auszuüben, damit die Platte (G) und der erste Kranz (81) gegen den anderen (82) gedrückt werden.

7. Lesegerät gemäß Anspruch 4, dadurch gekennzeichnet, daß die Mittel zum Verbinden des Kerns (80) und der drehbaren Scheibe (85) Elemente umfassen, die zwischen einer ersten, neutral genannten Position, in der sie oberhalb der Scheibe (85) einen für die Einbringung und die Herausnahme eines eine Platte (G) tragenden Arms (72) ausreichenden Raum schaffen, und einer zweiten, aktiv genannten Position, in der sie an die Scheibe (85) angenähert sind, um auf sie den mit einer Platte (G) verbundenen Kern zu drücken, beweglich sind.

8.  Lesegerät gemäß Anspruch 4, dadurch gekennzeichnet, daß der mittige Träger durch wenigstens zwei unabhängige, übereinander angeordnete Teilstücke gebildet wird, wobei der Arm (72) und die von ihm getragenen Platten (D bis I, J, P, Y) folglich parallel zueinander in wenigstens zwei verschiedenen Reihen angeordnet werden, wobei das Lesegerät so viele Grundplatten umfaßt wie Teilstücke (71) vorhanden sind, damit mehrere Platten (D bis I, J, P, Y) gleichzeitig analysiert werden können.

9.  Lesegerät gemäß Anspruch 1, dadurch gekennzeichnet, daß eine Platte (in Fig. 10 W1 bis W5) mit Mitteln zum Verschieben in Drehrichtung (301) verbunden wird, während wenigstens ein Paar von Informations-Analysatoren (306, 307) mit Verschiebungsmitteln (304-305, 407-408), die für die wahlweise Anordnung des Paars in der Position zum Lesen irgendeiner der Platten (W1 bis W5) geeignet sind, verbunden ist.

10. Lesegerät gemäß Anspruch 9, dadurch gekennzeichnet, daß die Mittel zum Verschieben des Paars von Informations-Analysatoren von einem Arm (305, 408) gebildet werden, der beweglich an einer Stütze (303, 400) angebracht ist, um in Längsrichtung entweder in radialer Richtung oder in Schwenkrichtung in bezug auf die Stütze angetrieben werden zu können.

FIG.1

FIG.2

FIG.3

FIG.4

FIG.5

FIG.6

FIG.7

EP 0 177 529 B1

FIG.8

FIG.9

16

FIG.14

FIG.10

FIG.11